# EUROPÄISCHE PATENTSCHRIFT

(11) **EP 0 992 932 B1**
(45) Veröffentlichungstag und Bekanntmachung des Hinweises auf die Patenterteilung: **12.03.2008**
(21) Anmeldenummer: 99119219.6
(22) Anmeldetag: 27.09.1999
(51) Int. Cl.: G06K 7/10

(54) **Optoelektronische Vorrichtung**
Optoelectronic device
Dispositif optoélectronique

(30) Priorität: 07.10.1998 DE 19846162
(43) Veröffentlichungstag der Anmeldung: 12.04.2000
(73) Patentinhaber: Leuze electronic GmbH + Co. KG, 73277 Owen/Teck (DE)
(72) Erfinder: Wörner, Jörg, 73235 Weilheim/Teck (DE); Nunnink, Laurens, 3823 SG Amersfoort (NL); Schonenberg, Cornelis Reinier Johannes, 3818 ZC Amersfoort (NL)
(74) Vertreter: Ruckh, Rainer Gerhard

(56) Entgegenhaltungen:
- US-A- 5 367 152
- US-A- 5 576 530
- US-A- 5 663 551

## Beschreibung

Die Erfindung betrifft eine optoelektronische Vorrichtung zum Erkennen von Marken gemäß dem Oberbegriff des Anspruchs 1.

Derartige Vorrichtungen können insbesondere zum Lesen von Barcodes eingesetzt werden. Die Barcodes sind im Überwachungsbereich angeordnet und werden von den vom Sendeelement der Vorrichtung emittierten Sendelichtstrahlen abgetastet. Hierzu weist die Vorrichtung eine Ablenkeinheit auf, die vorzugsweise von einem rotierenden Polygonspiegelrad mit mehreren facettenförmigen Spiegelflächen gebildet ist. Durch die Drehbewegung des Polygonspiegelrads überstreichen die Sendelichtstrahlen einen Überwachungsbereich, der sich entsprechend der Ausbildung der facettenförmigen Spiegelflächen vorzugsweise über einen vorgegebenen Winkelbereich innerhalb einer Abtastebene erstreckt. Die an der Ablenkeinheit abgelenkten Sendelichtstrahlen werden dabei durch ein Austrittsfenster im Gehäuse der Vorrichtung geführt. Durch die Anordnung der Ablenkeinheit relativ zum Sendeelement sowie zum Austrittsfenster ist die Lage der Abtastebene üblicherweise fest vorgegeben.

Oftmals ist es jedoch wünschenswert, bei einer fest vorgegebenen Einbauposition der optoelektronischen Vorrichtung die Orientierung der Abtastebene veränderbar zu gestalten, um eine Detektion von Barcodes auch dann zu ermöglichen, wenn diese in unterschiedlichen Richtungen zur Vorrichtung angeordnet sind. US 5 367 152 beschreibt eine derartige optoelektronische Vorrichtung.

Prinzipiell läßt sich dieses Problem mit geeigneten Befestigungsvorrichtungen lösen, an denen die Vorrichtung positionsverstellbar befestigt ist. Nachteilig hierbei ist jedoch, daß derartige Befestigungssysteme relativ aufwendig sind. Zudem ist für derartige Befestigungssysteme oftmals ein großer Platzbedarf erforderlich, da derartige Befestigungssysteme zum einen eine beträchtliche Baugröße aufweisen und zudem Raum für deren Bedienung vorgesehen werden muß. Schließlich ist das Anbringen der Vorrichtung am Befestigungssystem mit erheblichem Zeitaufwand verbunden.

Der Erfindung liegt die Aufgabe zugrunde, eine Vorrichtung der eingangs genannten Art so auszubilden, daß die räumliche Orientierung des Überwachungsbereichs auf möglichst einfache Weise veränderbar ist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße Vorrichtung weist ein Gehäuse mit einem Gehäuseaufsatz auf, welcher in zwei unterschiedlichen Einbaulagen auf eine Gehäuseöffnung im Gehäuse aufsetzbar ist. Der Gehäuseaufsatz weist zwei auf eine Gehäusekante zulaufende Wandelemente auf, wobei in einem der Wandelemente das Austrittsfenster integriert ist, durch welches die Sende- und Empfangslichtstrahlen geführt sind.

Je nach Einbaulage des Gehäuseaufsatzes am Gehäuse werden die Sendelichtstrahlen in unterschiedlicher Strahlrichtung durch das entsprechend positionierte Austrittsfenster geführt. In einer besonders vorteilhaften Ausführungsform werden bei einer ersten Einbaulage des Gehäuseaufsatzes die Sendelichtstrahlen direkt von der Ablenkeinheit zum Austrittsfenster geführt. Bei der zweiten Einbaulage werden die an der Ablenkeinheit abgelenkten Sendelichtstrahlen über einen Umlenkspiegel durch das Austrittsfenster geführt. Die Orientierung des Überwachungsbereichs kann somit auf einfache Weise durch unterschiedliches Aufsetzen des Gehäuseaufsatzes auf das Gehäuse verändert werden, wobei bei einer Einbaulage nur der Umlenkspiegel vorzugsweise durch einfaches Einstecken in eine Halterung installiert wird.

Die Gehäuseöffnung, auf welche der Gehäuseaufsatz aufgesteckt wird, erstreckt sich wenigstens über Teile zweier auf eine Gehäusekante zulaufender Seitenwände des Gehäuses und ist an diesen Seitenwänden durch einen oberen und unteren Teil eines Gehäuserandes begrenzt. Die seitlichen Teile des Gehäuserandes verlaufen quer zum oberen und unteren Gehäuserand längs einer konkav gekrümmten Bogenlinie.

Der Rand des Gehäuseaufsatzes ist entsprechend der Kontur des Gehäuserandes ausgebildet, so daß durch den Anpreßdruck beim Aufsetzen des Gehäuseaufsatzes dieser Rand am Gehäuserand dicht anliegt.

Durch die jeweils längs einer Bogenlinie verlaufenden seitlichen Teile des Gehäuserandes ist gewährleistet, daß der Anpreßdruck zumindest annähernd gleichmäßig über den Umfang des Gehäuserandes verteilt ist, wodurch eine entsprechend gleichmäßige Dichtwirkung erzielt wird. Vorzugsweise weisen die Bogenlinien jeweils die Form eines Kreisbogens auf. Auf diese Weise wird der Anpreßdruck gleichmäßig, auf den Umfang des Gehäuserandes verteilt.

Ferner wird durch die gleichmäßige Verteilung der Anpreßkräfte über den Umfang des Gehäuserandes erreicht, daß mehrere über diesen Umfang verteilte Rastmittel bei Anpressen des Gehäuseaufsatzes gleichzeitig einrasten. Dies ermöglicht eine sehr einfache Anbringung des Gehäuseaufsatzes am Gehäuse.

Die Erfindung wird im nachstehenden anhand der Zeichnungen erläutert. Es zeigen:
- Figur 1:: Schematische Darstellung der auf einem Gehäuseeinsatz montierten optischen und elektronischen Komponenten der erfindungsgemäßen optoelektronischen Vorrichtung.
- Figur 2:: Dreidimensionale Darstellung des Gehäuses der Vorrichtung mit einem daran aufsitzenden Gehäuseaufsatz und einem Gehäusedeckel
a) für eine erste Einbaulage des Gehäuseaufsatzes,
b) für eine zweite Einbaulage des Gehäuseaufsatzes.
- Figur 3a:: Dreidimensionale Darstellung des auf dem Gehäuseboden aufliegenden Gehäuses gemäß Figur 2 mit der offenen Gehäuseöffnung für den Gehäusedeckel.
- Figur 3b:: Dreidimensionale Darstellung des auf der Decke aufliegenden Gehäuses gemäß Figur 2 mit der offenen Gehäuseöffnung für den Gehäuseaufsatz.
- Figur 4:: Dreidimensionale Darstellung des Gehäuseaufsatzes gemäß Figur 2.

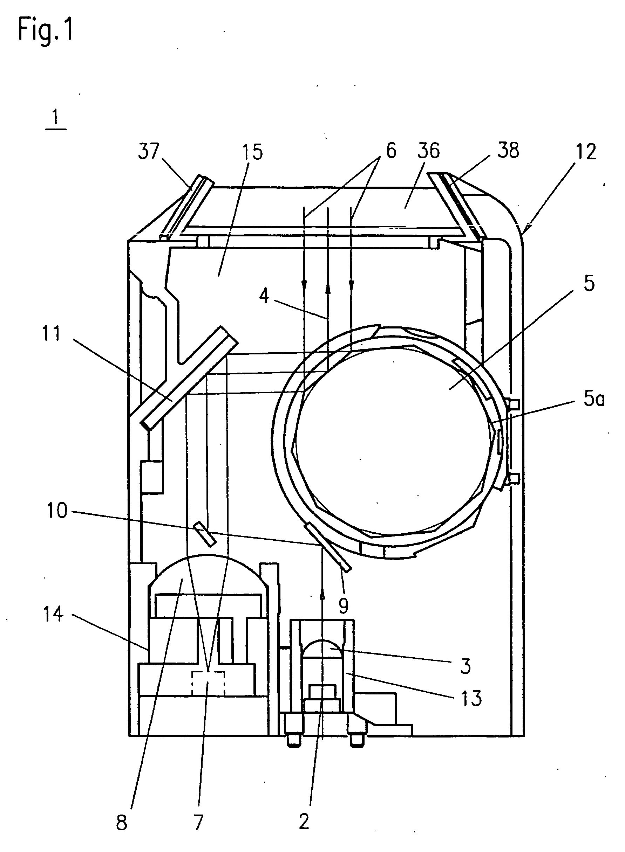

In Figur 1 ist der Aufbau einer optoelektronischen Vorrichtung 1 zum Erkennen von mit definierten Kontrastmustern versehenen Marken dargestellt. Prinzipiell können die Marken beliebige Folgen und Formen von aneinander angrenzenden Hell-Dunkelflächen, vorzugsweise Schwarz-Weiß-Flächen, aufweisen. Im folgenden soll die Erfindung für den Fall erläutert werden, daß die Marken von Barcodes gebildet sind. Die Barcodes bestehen im wesentlichen aus einer Folge von schwarzen und weißen Strichelementen definierter Länge und Breite.

Die optoelektronische Vorrichtung 1 weist ein Sendeelement, ein Empfangselement sowie eine nicht dargestellte Auswerteeinheit auf. Das Sendeelement besteht aus einem Sender 2, vorzugsweise einer Laserdiode, sowie aus einer dem Sender 2 nachgeordneten Sendeoptik 3 zur Fokussierung der Sendelichtstrahlen 4. Die fokussierten Sendelichtstrahlen 4 werden über eine Ablenkeinheit, die im vorliegenden Ausführungsbeispiel von einem rotierenden Polygonspiegelrad 5 mit mehreren facettenförmigen Spiegelflächen 5a gebildet ist, abgelenkt und über den zu detektierenden Barcode geführt. Die Drehachse des Polygonspiegelrads 5 ist senkrecht zur in Figur 1 dargestellten Äquatorialebene des Polygonspiegelrads 5 angeordnet.

Die vom Barcode reflektierten Empfangslichtstrahlen 6 werden über das Polygonspiegelrad 5 zum Empfangselement geführt. Das Empfangselement weist einen Empfänger 7 auf, der von einer Fotodiode gebildet ist, in dem die Empfangslichtstrahlen 6 in elektrische Empfangssignale gewandelt werden, einem diesem nachgeschalteten nicht dargestellten Verstärker. Zur Verbesserung der Nachweisempfindlichkeit ist dem Empfänger 7 eine Empfangsoptik 8 vorgeordnet.

Die am Ausgang des Empfangselements anstehenden Empfangssignale werden der Auswerteeinheit zugeführt, welche beispielsweise von einem Microcontroller gebildet ist.

Die Empfangslichtstrahlen 6, die an den Barcodes reflektiert werden, weisen entsprechend der Folge von schwarzen und weißen Strichelementen des Barcodes eine Amplitudenmodulation auf. Die am Ausgang des Empfängers 7 anstehenden Empfangssignale weisen eine entsprechende Amplitudenmodulation auf. Die analogen, amplitudenmodulierten Empfangssignale werden in der Auswerteeinheit mittels einer Schwellwerteinheit bewertet. Dadurch entsteht eine binäre Signalfolge, anhand derer durch Vergleich mit abgespeicherten Kontrastmustern von Barcodes die Erkennung des Barcodes erfolgt.

Durch die Drehbewegung der Ablenkeinheit werden die Sendelichtstrahlen 4 periodisch in einem vorgegebenen Überwachungsbereich geführt. Im vorliegenden Ausführungsbeispiel ist der von den Sendelichtstrahlen 4 überstrichene Winkelbereich durch die Anzahl der Spiegelflächen 5a des Polygonspiegelrads 5 vorgegeben. Dabei werden die Sende- 4 und Empfangslichtstrahlen 6 jeweils über dieselbe Spiegelfläche 5a des Polygonspiegelrads 5 abgelenkt, wobei dabei die Sende- 4 und Empfangslichtstrahlen 6 koaxial geführt sind. Die koaxiale Strahlführung im Bereich der Ablenkeinheit wird durch mehrere Umlenkspiegel 9, 10, 11 innerhalb der Vorrichtung 1 erzielt. Ein erster Umlenkspiegel 9 ist der Sendeoptik 3 nachgeordnet, welcher die Sendelichtstrahlen 4 auf einen zweiten, Umlenkspiegel 10 lenkt. Von dort werden die Sendelichtstrahlen 4 auf einen dritten Umlenkspiegel 11 geführt, über welchen die Sendelichtstrahlen 4 auf eine Spiegelfläche 5a des Polygonspiegelrads 5 geführt und von dort in den Überwachungsbereich geführt sind. Die koaxial zu den Sendelichtstrahlen 4 auf die Spiegelfläche 5a des Polygonspiegelrads 5 auftreffenden Empfangslichtstrahlen 6 werden am dritten Umlenkspiegel 11 abgelenkt und treffen auf die hinter dem zweiten Umlenkspiegel 10 angeordnete Empfangsoptik 8, welche die Empfangslichtstrahlen 6 auf den Empfänger 7 fokussiert. Zweckmäßigerweise ist der Durchmesser des zweiten Umlenkspiegels 10 erheblich kleiner als der Durchmesser der Empfangsoptik 8, damit nur ein kleiner Teil der Empfangsoptik 8 durch den Umlenkspiegel 10 abgeschattet wird.

Die optoelektronischen Komponenten, insbesondere das Sende- und Empfangselement, die Umlenkspiegel 9, 10, 11 sowie die Ablenkeinheit sind an einem Gehäuseeinsatz 12 befestigt, der als Kunststoff-Spritzteil ausgebildet ist. Dabei ist die Ablenkeinheit am Gehäuseeinsatz 12 drehbar gelagert und wird mittels eines nicht dargestellten Motors angetrieben. Der Sender 2 und die Sendeoptik 3 sind in einer ersten Aufnahme 13 ortsfest am Gehäuseeinsatz 12 angeordnet. Vorzugsweise ist diese Aufnahme 13 hohlzylindrisch ausgebildet. Der Empfänger 7 und die Empfangsoptik 8 sind in einer zweiten hohlzylindrischen Aufnahme 14 gehalten. Zweckmäßigerweise sind die Aufnahmen 13, 14 mit dem Gehäuseeinsatz 12 einstückig ausgebildet. Die Umlenkspiegel 9, 10, 11 sind an Wandelementen des Gehäuseeinsatzes 12 befestigt.

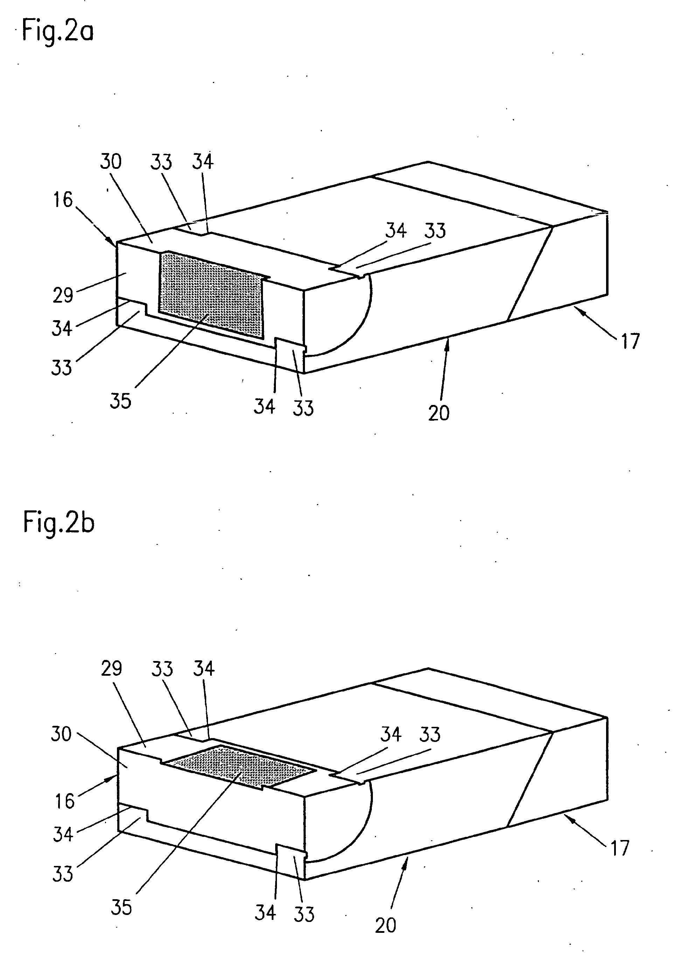

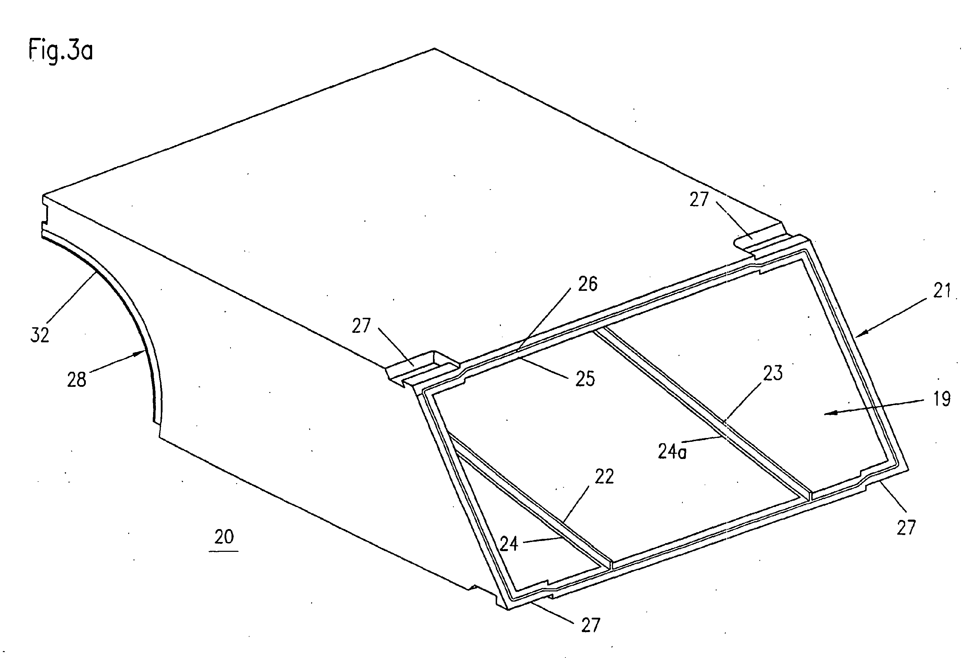

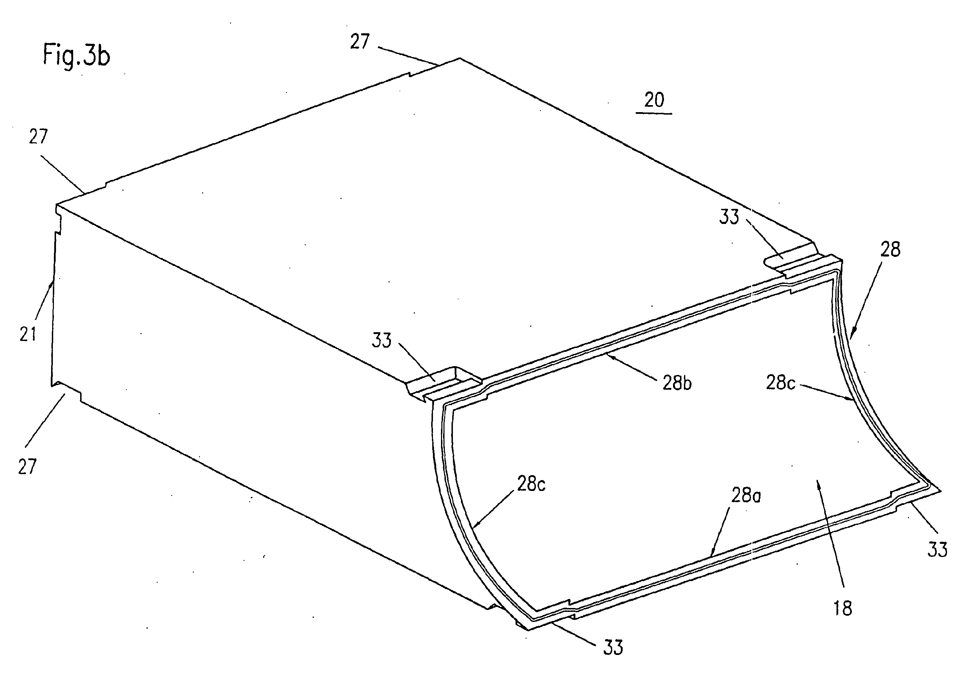

Wie in den Figuren 2a, b und 3a, b dargestellt, ist für die optoelektronische Vorrichtung 1 ein Gehäuseaufsatz 16 und ein Gehäusedeckel 17, welche jeweils auf einer Gehäuseöffnung 18, 19 eines Gehäuses 20 aufsitzen, vorgesehen.

Die Montage der Vorrichtung 1 erfolgt in folgenden Schritten. Zunächst werden die einzelnen optischen und elektronischen Komponenten an dem Gehäuseeinsatz 12 montiert. Die auf diese Weise fertig montierte und justierte Einheit wird dann in das Gehäuse 20 eingebracht, welches anschließend durch Aufstecken des Gehäusedeckels 17 und des Gehäuseaufsatzes 16 verschlossen wird.

Das mit dem Gehäuseaufsatz 16 und dem Gehäusedeckel 17 abgeschlossene Gehäuse 20 weist eine im wesentlichen quaderförmige Aussenkontur auf.

Zweckmäßigerweise sind sowohl der Gehäusedeckel 17, der Gehäuseaufsatz 16 als auch das Gehäuse 20 jeweils von einem Kunststoff-Spritzteil gebildet. Der Gehäuseeinsatz 12 ist durch die von einem Gehäuserand 21 begrenzte Gehäuseöffnung 19 in das Innere des Gehäuses 20 einführbar.

Bei dem in Figur 3a dargestellten Ausführungsbeispiel sind zur Befestigung des Gehäuseeinsatzes 12 am Boden des Gehäuses 20 zwei Führungsschienen 22, 23 vorgesehen, welche parallel zueinander in Längsrichtung des Bodens verlaufen und an der Gehäuseöffnung 19 ausmünden.

Entsprechend sind an der Unterseite des Gehäuseeinsatzes 12 zwei parallel verlaufende nicht dargestellte Führungsnuten vorgesehen, welche den Boden 15 des Gehäuseeinsatzes 12 in Längsrichtung durchsetzen.

Zur Montage des Gehäuseeinsatzes 12 im Gehäuse 20 muß der Gehäuseeinsatz 12 lediglich durch die Gehäuseöffnung 19 eingeschoben werden. Der Gehäuseeinsatz 12 wird dabei so auf den Boden des Gehäuses 20 aufgesetzt, daß die Führungsnuten in die Führungsschienen 22, 23 greifen. Die Führungsnuten sitzen dabei formschlüssig auf den Führungsschienen 22, 23 auf, so daß ein hinreichender Halt des Gehäuseeinsatzes 12 am Gehäuse 20 gewährleistet ist. Weitere Befestigungsmittel brauchen demzufolge nicht vorgesehen werden.

Dabei sind die Führungsschienen 22, 23 zweckmäßig als federnde Kunststoffschienen ausgebildet, wobei als Kunststoff vorzugsweise PTS-Thermoflex verwendet wird. Diese Kunststoffschienen sind als Kunststoff-Spritzteile ausgebildet. Zur Herstellung dieser Kunststoff-Spritzteile sind im Boden des Gehäuses 20 entsprechend der Form der Führungsschienen 22, 23 Nuten 24, 24a vorgesehen, in welche in einem Spritzvorgang PTS-Thermoflex eingespritzt wird. Infolge der Materialeigenschaften von PTS-Thermoflex entsteht eine reibschlüssige Verbindung zwischen den Führungsschienen 22, 23 und den Führungsnuten wodurch ein besonders guter Halt des Gehäuseeinsatzes 12 am Gehäuseboden gewährleistet ist.

An dem die Gehäuseöffnung 19 begrenzenden Gehäuserand 21 ist eine Dichtung 25 angebracht, die ebenfalls als Kunststoff-Spritzteil ausgebildet ist. Dabei wird als Kunststoff wiederum PTS-Thermoflex verwendet, welcher in eine am Gehäuserand 21 umlaufende Nut 26 eingespritzt wird.

Vorteilhafterweise münden die Nuten 24, 24a, in welche die Führungsschienen 22, 23 eingebracht werden, in die umlaufende Nut 26 am Gehäuserand 21 ein. Somit können die darin eingespritzte Dichtung 25 sowie die Führungsschienen 22, 23 einstückig ausgebildet sein und in einem Spritzvorgang als zusammenhängendes Kunststoff-Spritzteil hergestellt werden.

Der Gehäusedeckel 17 weist an seinem äußeren Rand ebenfalls eine nicht dargestellte umlaufende Nut auf, in welche die Dichtung 25 am Gehäuserand 21 bei Aufsetzen des Gehäusedeckels auf das Gehäuse 20 formschlüssig greift. Zur Befestigung des Gehäusedeckels 17 sind an der Ober- und Unterseite des Gehäuses 20 am Gehäuserand 21 ausmündende Aufnahmen 27 vorgesehen, in welche nicht dargestellte Rastmittel am Gehäusedeckel 17 einrasten.

Die Gehäuseöffnung 18, auf welche der Gehäuseaufsatz 16 aufgesetzt wird, erstreckt sich über die Frontwand des Gehäuses 20 sowie einen daran angrenzenden Teil des Bodens des Gehäuses 20 (Figur 3b). Dabei erstreckt sich die Gehäuseöffnung 18 über die gesamte Breite der Frontwand und des Bodens des Gehäuses 20.

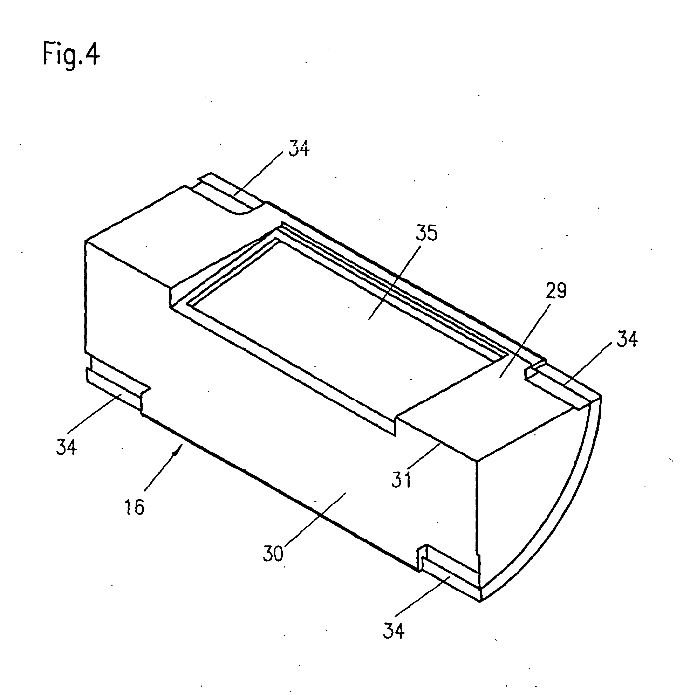

Die Gehäuseöffnung 18 ist durch einen Gehäuserand 28 begrenzt, auf welchen der Gehäuseaufsatz 16 aufgesetzt wird. Der Gehäuseaufsatz 16 und das Gehäuse 20 ergänzen sich zu einer quaderförmigen Aussenkontur. Hierzu weist wie insbesondere aus Figur 4 ersichtlich ist der Gehäuseaufsatz 16 zwei im rechten Winkel auf eine Gehäusekante 31 zulaufende Wandelemente 29, 30 auf, welche bei auf der Gehäuseöffnung 18 aufsitzendem Gehäuseaufsatz 16 bündig an dem oberen und unteren Teil 28a, 28b des Gehäuserandes 28 an die Frontwand und den Boden des Gehäuses 20 anschließen. Dabei verlaufen der obere und untere Teil 28a, 28b des Gehäuserandes 28 parallel zur Gehäusekante 31, auf welche die Wandelemente 29, 30 des Gehäuseaufsatzes 16 zulaufen.

Die seitlichen Teile 28c des Gehäuserandes 28 verlaufen jeweils in einer Seitenwand des Gehäuses 20 längs einer konkav gekrümmten Bogenlinie. Im vorliegenden Ausführungsbeispiel ist diese Bogenlinie kreisförmig gekrümmt und erstreckt sich über eine Winkelbereich von 90°. Der Kreismittelpunkt dieser Bogenlinien liegt bei aufsitzendem Gehäuseaufsatz 16 jeweils in einem Eckpunkt der Gehäusekante 31 dieses Gehäuseaufsatzes 16.

Die Seitenwände des Gehäuseaufsatzes 16 sind durch einen bogenförmigen Rand begrenzt, welcher der Form der seitlichen Teile 28c des Gehäuserandes 28 entspricht.

Dadurch ist gewährleistet, daß der Gehäuseaufsatz 16 mit seinem äußeren Rand formschlüssig auf dem Gehäuserand 28 aufsitzt. Die Schnittlinie zwischen Gehäuseaufsatz 16 und Gehäuse 20 ist mittels Dichtmitteln abgedichtet. Hierzu ist an dem Gehäuserand 28 eine von diesem hervorstehende Dichtung 32 vorgesehen, welche sich über den gesamten Umfang des Gehäuserandes 28 erstreckt. Am Rand des Gehäuseaufsatzes 16 ist eine ebenfalls in Umfangsrichtung verlaufende nicht dargestellte Nut vorgesehen. Bei Aufsetzen des Gehäuseaufsatzes 16 auf den Gehäuserand 28 greift die Dichtung 32 formschlüssig in diese Nut.

Zweckmäßigerweise ist die Dichtung 32 als Kunststoff-Spritzteil ausgebildet, wobei der Kunststoff in eine in Umfangsrichtung des Gehäuserandes 28 umlaufende Nut 32a eingespritzt ist. Als Kunststoff wird vorzugsweise PTS-Thermoflex verwendet.

Vorteilhafterweise münden in die Nuten 24, 24a für die Führungsschienen 22, 23 in die Nuten 26, 32a für die Dichtungen 25, 32.

Somit bilden die Dichtungen 25, 32 an den Gehäuseöffnungen 18, 19 sowie die Führungsschienen 22, 23 ein zusammenhängendes Kunststoff-Spritzteil.

Der Gehäuseaufsatz 16 ist durch Rastmittel am Gehäuse 20 befestigbar. Als Rastmittel ist an jedem Ende des oberen und unteren Gehäuserandes 28 eine Rastnase 33 vorgesehen, welche schwalbenschwanzförmig ausgebildet ist und über den Gehäuserand 28 hervorsteht. Entsprechend sind am Rand des Gehäuseaufsatzes 16 Rastaufnahmen 34 vorgesehen, in welche die Rastnasen 33 bei auf dem Gehäuserand 28 aufsitzendem Gehäuseaufsatz 16 formschlüssig greifen.

Durch die erfindungsgemäße Ausbildung des Verlaufs des Gehäuserandes 28 ist eine besonders einfache Montage des Gehäuseaufsatzes 16 gewährleistet. Der Gehäuseaufsatz 16 wird hierzu auf den Gehäuserand 28 aufgesetzt. Durch Aufdrücken auf die Oberseite des Gehäuseaufsatzes 16, vorzugsweise auf die Gehäusekante 31, rasten die Rastnasen 33 an den Rastaufnahmen 34 gleichzeitig ein. Dies wird dadurch ermöglicht, daß die seitlichen Teile 28c des Gehäuserandes 28 längs eines Kreisbogens verlaufen. Durch diese Ausbildung wird erreicht, daß durch einen auf die Oberseite des Gehäuseaufsatzes 16 ausgeübten Anpreßdruck Druckkräfte erzeugt werden, die in Längsrichtung der Rastnasen 33 sowohl am oberen als auch am unteren Teil 28a, 28b des Gehäuserandes 28 wirken.

Gleichzeitig wird durch die erfindungsgemäße Ausbildung erreicht, daß der Anpreßdruck auf den Gehäuseaufsatz 16 gleichmäßig auf den Gehäuserand 28 verteilt wird. Dies hat zur Folge, daß die Dichtung 32 am Gehäuserand 28 über den gesamten Umfang gleichmäßig in die Nut am Rand des Gehäuseaufsatzes 16 eingepreßt wird.

In einem der Wandelemente 29, 30 des Gehäuseaufsatzes 16 ist ein Austrittsfenster 35 integriert, durch welches die Sende- 4 und Empfangslichtstrahlen 6 geführt werden.

Da der Gehäuseaufsatz 16 im wesentlichen spiegelsymmetrisch zu der Winkelhalbierenden des Winkels zwischen den Wandelementen 29, 30 aufgebaut ist, kann der Gehäuseaufsatz 16 in den beiden in Figur 2a und 2b dargestellten Einbaulagen am Gehäuse 20 moniert werden.

In der ersten, in Figur 2a dargestellten Einbaulage befindet sich das Austrittsfenster 35 in der Frontwand des Gehäuses 20.

In diesem Fall werden die Sendelichtstrahlen 4 direkt über der Ablenkeinheit zum Austrittsfenster 35 geführt.

Die Sende- 4 und Empfangslichtstrahlen 6 verlaufen dann sowohl innerhalb der Vorrichtung 1 als auch außerhalb der Vorrichtung 1 im Überwachungsbereich in einer Ebene, welche parallel zum Boden des Gehäuses 20 verläuft.

In der zweiten, in Figur 2b dargestellten Einbaulage des Gehäuseaufsatzes 16 befindet sich das Austrittsfenster 35 im Boden des Gehäuses 20.

In diesem Fall wird zur Strahlumlenkung der Sende- 4 und Empfangslichtstrahlen 6 ein Umlenkspiegel 36 in eine Halterung am Gehäuseeinsatz 12 eingesetzt. Die Halterung besteht wie in Figur 1 dargestellt aus zwei schlitzförmigen Aufnahmen 37, 38 in welche der Umlenkspiegel 36 eingesteckt wird. Dabei ist der Umlenkspiegel 36 um 45° gegenüber der Ebene, in welcher der Boden des Gehäuses 20 liegt, geneigt. Die vom Sendeelement emittierten Sendelichtstrahlen 4 verlaufen horizontal und parallel in dieser Ebene auf die Ablenkeinheit zu und werden von dort ebenfalls horizontal verlaufend in Richtung des Umlenkspiegels 36 abgelenkt. Am Umlenkspiegel 36 werden die Sendelichtstrahlen 4 im rechten Winkel abgelenkt und durchsetzten in vertikaler Richtung verlaufend das Austrittsfenster 35.

## Patentansprüche

1. Optoelektronische Vorrichtung zum Erkennen von mit definierten Kontrastmustern versehenen Marken mit einem Gehäuse, in welchem ein Sendelichtstrahlen emittierendes Sendeelement, ein Empfangslichtstrahlen empfangendes Empfangselement sowie eine Ablenkeinheit, mittels derer die Sendelichtstrahlen periodisch innerhalb eines Überwachungsbereichs geführt sind, integriert sind, **dadurch gekennzeichnet, daß** das Gehäuse (20) eine Gehäuseöffnung (18) aufweist, welche sich wenigstens über Teile zweier auf eine Gehäusekante (31) zulaufender, aneinandergrenzender Seitenwände des Gehäuses erstreckt und an diesen Seitenwänden durch einen oberen und unteren Teil (28a, 28b) eines Gehäuserandes (28) begrenzt ist, daß die Gehäuseöffnung (18) durch seitliche Teile (28c) des Gehäuserandes (28) begrenzt sind, welche quer zu dem oberen und unteren Teil (28a, 28b) des Gehäuserandes (28) jeweils längs einer konkav eingewölbten Bogenlinie verlaufen, daß auf die Gehäuseöffnung (18) ein Gehäuseaufsatz (16) mit zwei auf eine die Gehäusekante (31) bildende Kante zulaufenden Wandelementen (29, 30) wahlweise so aufsetzbar ist, daß eines der Wandelemente (29, 30), in welchem ein Austrittsfenster (35) vorgesehen ist, an den oberen oder unteren Teil (28a oder 28b) des Gehäuserandes (28) angrenzt, wobei die Sende- (4) und Empfangslichtstrahlen (6) durch das Austrittsfenster (35) geführt sind, daß durch den Anpreßdruck beim Aufsetzen des Gehäuseaufsatzes (16) dieser am Gehäuse (20) mittels Rastmitteln einrastet und daß dadurch der Gehäuserand (28) am Rand des Gehäuseaufsatzes (16) dicht anliegt.

2. Optoelektronische Vorrichtung nach Anspruch 1, **dadurch gekennzeichnet, daß** sich die Gehäuseöffnung (18) über die Frontwand und einen an diese angrenzenden Teil des Bodens des Gehäuses (20) erstreckt.

3. Optoelektronische Vorrichtung nach Anspruch 2, **dadurch gekennzeichnet, daß** sich die Gehäuseöffnung (18) über die gesamte Breite der Frontwand und des Bodens des Gehäuses (20) erstreckt.

4. Optoelektronische Vorrichtung nach einem der Ansprüche 1 - 3, **dadurch gekennzeichnet, daß** das Gehäuse (20) mit dem darauf aufsitzenden Gehäuseaufsatz (16) eine im wesentlichen quaderförmige Aussenkontur aufweist.

5. Optoelektronische Vorrichtung nach einem der Ansprüche 1 - 4, **dadurch gekennzeichnet, daß** die seitlichen Teile (28c) des Gehäuserandes (28) jeweils längs eines Kreisbogens verlaufen, dessen Mittelpunkt jeweils in einem Eckpunkt der Gehäusekante (31) liegt.

6. Optoelektronische Vorrichtung nach einem der Ansprüche 1 - 5, **dadurch gekennzeichnet, daß** der obere und untere Teil (28a, 28b) des Gehäuserandes (28) jeweils längs einer Geraden parallel zur Gehäusekante (31) verlaufen.

7. Optoelektronische Vorrichtung nach einem der Ansprüche 1 - 6, **dadurch gekennzeichnet, daß** der Gehäuseaufsatz (16) formschlüssig auf dem Gehäuserand (28) des Gehäuses (20) aufsitzt.

8. Optoelektronische Vorrichtung nach Anspruch 7, **dadurch gekennzeichnet, daß** an dem Gehäuserand (28) eine von diesem hervorstehende, sich über den gesamten Umfang des Gehäuserandes (28) erstreckende Dichtung (32) vorgesehen ist, in welche eine Nut am Rand des Gehäuseaufsatzes (16) formschlüssig greift.

9. Optoelektronische Vorrichtung nach Anspruch 8, **dadurch gekennzeichnet, daß** die Dichtung (32) als Kunststoff-Spritzteil ausgebildet ist, wobei der Kunststoff in eine in Umfangsrichtung verlaufende Nut (32a) im Gehäuserand (28) eingespritzt ist.

10. Optoelektronische Vorrichtung nach Anspruch 9, **dadurch gekennzeichnet, daß** der Kunststoff von PTS-Thermoflex gebildet ist.

11. Optoelektronische Vorrichtung nach einem der Ansprüche 1 - 10, **dadurch gekennzeichnet, daß** als Rastmittel am Gehäuse (20) jeweils an jedem Ende des oberen und unteren Teils (28a, 28b) des Gehäuserandes (28) eine über den Gehäuserand (28) hervorstehende, schwalbenschwanzförmig ausgebildete Rastnase (33) vorgesehen ist, welche in eine Rastaufnahme (34) am Rand des Gehäuseaufsatzes (16) formschlüssig greift.

12. Optoelektronische Vorrichtung nach einem der Ansprüche 2 - 11, **dadurch gekennzeichnet, daß** bei in der Frontwand des Gehäuses (20) angeordnetem Austrittsfenster (35) die Sendelichtstrahlen (4) über die Ablenkeinheit durch das Austrittsfenster (35) in einen in einer Ebene liegenden Überwachungsbereich geführt sind.

13. Optoelektronische Vorrichtung nach Anspruch 12, **dadurch gekennzeichnet, daß** die Ebene parallel zum Boden des Gehäuses (20) verläuft.

14. Optoelektronische Vorrichtung nach einem der Ansprüche 2 - 11, **dadurch gekennzeichnet, daß** bei in der Ebene des Bodens des Gehäuses (20) angeordnetem Austrittsfenster (35) die an der Ablenkeinheit umgelenkten Sendelichtstrahlen (4) über einen Umlenkspiegel (36) abgelenkt und durch das Austrittsfenster (35) in den Überwachungsbereich geführt sind.

15. Optoelektronische Vorrichtung nach Anspruch 14, **dadurch gekennzeichnet, daß** die am Umlenkspiegel (36) abgelenkten Sendelichtstrahlen (4) im rechten Winkel zur Ebene des Bodens des Gehäuses (20) verlaufen.

16. Optoelektronische Vorrichtung nach Anspruch 14 oder 15, **dadurch gekennzeichnet, daß** der Umlenkspiegel (36) in eine Halterung einsteckbar ist.

17. Optoelektronische Vorrichtung nach Anspruch 16, **dadurch gekennzeichnet, daß** der Umlenkspiegel (36) durch die Gehäuseöffnung (18) in die Halterung einführbar ist.

## Claims

1. Optoelectronic device for recognition of marks provided with defined contrast patterns, comprising a housing, in which a transmitting element emitting transmitted light beams, a receiving element receiving received light beams and a deflecting unit, by means of which the transmitted light beams are periodically guided within a monitoring region, are integrated, **characterised in that** a housing (20) has a housing opening (18) which extends at least over parts of two mutually adjoining side walls, which run together at a housing edge (31), of the housing and is bounded at these side walls by an upper and lower part (28a, 28b) of a housing edge (28), that the housing opening (18) is bounded by lateral parts (28c) of the housing edge (28), which extend transversely to the upper and lower part (28a, 28b) of the housing edge (28) respectively along a concavely bowed curved line, that a housing top part (16) with two wall elements (29, 30) running together at an edge forming the housing edge (31) can be selectably so placed on the housing opening (18) that one of the wall elements (29, 30) in which an outlet window (35) is provided adjoins the upper or lower part (28a or 28b) of the housing edge (28), wherein the transmitted light beams (4) and the received light beams (6) are guided through the outlet window (35), that through the pressing-on pressure when the housing top part (16) is placed on this detents at the housing (20) by means of detent means and that the housing edge (28) thereby sealingly bears against the edge of the housing top part (16).

2. Optoelectronic device according to claim 1, **characterised in that** the housing opening (18) extends over the front wall and a part of the base of the housing (20) adjoining this.

3. Optoelectronic device according to claim 2, **characterised in that** the housing opening (18) extends over the entire width of the front wall and the base of the housing (20).

4. Optoelectronic device according to one of claims 1 to 3, **characterised in that** the housing (20) together with the housing top part (16) heated thereon has a substantially block-shaped outer contour.

5. Optoelectronic device according to one of claims 1 to 4, **characterised in that** the lateral parts (20c) of the housing edge (28) respectively extend along an arc, the centre point of which respectively lies at a corner point of the housing edge (31).

6. Optoelectronic device according to one of claims 1 to 5, **characterised in that** the upper and lower parts (28a, 28b) of the housing edge (28) respectively extend along a line parallel to the housing edge (31).

7. Optoelectronic device according to one of claims 1 to 6, **characterised in that** the housing top part (16) is seated in shape-locking manner on the housing edge (28) of the housing (20).

8. Optoelectronic device according to claim 7, **characterised in that** provided at the housing edge (28) is a seal (32) which protrudes therefrom and extends over the entire circumference of the housing edge (28) and in which a groove at the edge of the housing top part (16) engages in shape-locking manner.

9. Optoelectronic device according to claim 8, **characterised in that** the seal (32) is constructed as a plastics material injection-moulded part, wherein the plastics material is injection-moulded in a groove (32a), which extends in the circumferential direction, in the housing edge (28).

10. Optoelectronic device according to claim 9, **characterised in that** the plastics material is formed from PTS-Thermoflex.

11. Optoelectronic device according to one of claims 1 to 10, **characterised in that** provided as detent means at the housing (20) at each end of the upper and lower part (28a, 28b) of the housing edge (28) is a respective detent lug (33) of dovetail-shaped construction which protrudes beyond the housing edge (28) and which engages in shape-locking manner in a detent receptacle (34) at the edge of the housing top part (16).

12. Optoelectronic device according to one of claims 2 to 11, **characterised in that** in the case of an output window (35) arranged in the front wall of the housing (20) the transmitted light beams (4) are guided by way of the deflecting unit through the outlet window (35) into a monitoring region lying in a plane.

13. Optoelectronic device according to claim 12, **characterised in that** the plane extends parallel to the base of the housing (20).

14. Optoelectronic device according to one of claims 2 to 11, **characterised in that** in the case of an outlet window (35) arranged in the plane at the base of the housing (20) the transmitted light beams (4) deflected at the deflecting unit are deflected by way of a deflecting mirror (36) and guided through the outlet window (25) into the monitoring region.

15. Optoelectronic device according to claim 14, **characterised in that** the transmitted light beams (4) deflected at the deflecting mirror (36) run at a right angle to the plane of the base of the housing (20).

16. Optoelectronic device according to claim 14 or 15, **characterised in that** the deflecting mirror (36) is insertable into a holder.

17. Optoelectronic device according to claim 16, **characterised in that** the deflecting mirror (36) is introducible into the holder via the housing opening (18).

## Revendications

1. Dispositif optoélectronique pour la détection de marques pourvues de motifs contrastés définis, comprenant un boîtier dans lequel sont intégrés un élément émetteur émettant des rayons lumineux d'émission, un élément récepteur recevant des rayons lumineux de réception ainsi qu'une unité de déflexion au moyen de laquelle les rayons lumineux d'émission sont périodiquement guidés à l'intérieur d'une zone de surveillance, **caractérisé en ce que** le boîtier (20) comporte une ouverture de boîtier (18) qui s'étend au moins sur des parties de deux parois latérales adjacentes du boîtier aboutissant sur une arête de boîtier (31) et qui est limitée sur ces parois latérales par des parties supérieure et inférieure (28a, 28b) d'un bord de boîtier (28), que l'ouverture de boîtier (18) est limitée par des parties latérales (28c) du bord de boîtier (28) qui s'étendent chacune transversalement aux parties supérieure et inférieure (28a, 28b) du bord de boîtier (28) le long d'une ligne curviligne à courbure concave, qu'une pièce rapportée de boîtier (16) avec deux éléments de paroi (29, 30) aboutissant sur une arête formant l'arête de boîtier (31) peut être posé au choix sur l'ouverture de boîtier (18) de façon qu'un des éléments de paroi (29, 30), dans lequel une fenêtre de sortie (35) est prévue, soit adjacente à la partie supérieure ou inférieure (28a, 28b) du bord de boîtier (28), les rayons lumineux d'émission (4) et de réception (6) étant guidés à travers la fenêtre de sortie (35), que sous l'action de la pression d'application exercée lors de la pose de la pièce rapportée de boîtier (16) celle-ci s'enclenche sur le boîtier (20) au moyen de moyens d'enclenchement et que de ce fait le bord de boîtier (28) est attenant au bord de la pièce rapportée de boîtier (16).

2. Dispositif optoélectronique selon la revendication 1, **caractérisé en ce que** l'ouverture de boîtier (18) s'étend sur la paroi frontale et une partie du fond du boîtier (20) adjacente à celle-ci.

3. Dispositif optoélectronique selon la revendication 2, **caractérisé en ce que** l'ouverture de boîtier (18) s'étend sur toute la largeur de la paroi frontale et du fond du boîtier (20).

4. Dispositif optoélectronique selon l'une des revendications 1 à 3, **caractérisé en ce que** le boîtier (20) avec la pièce rapportée de boîtier (16) posée dessus présente un contour extérieur essentiellement parallélépipédique.

5. Dispositif optoélectronique selon l'une des revendications 1 à 4, **caractérisé en ce que** les parties latérales (28c) du bord de boîtier (28) s'étendent chacune le long d'un arc de cercle dont le centre se trouve au sommet de l'arête de boîtier (31).

6. Dispositif optoélectronique selon l'une des revendications 1 à 5, **caractérisé en ce que** les parties supérieure et inférieure (28a, 28b) du bord de boîtier (28) s'étendent chacune le long d'une droite parallèle à l'arête de boîtier (31).

7. Dispositif optoélectronique selon l'une des revendications 1 à 6, **caractérisé en ce que** la pièce rapportée de boîtier (16) est posée par complémentarité de formes sur le bord de boîtier (28) du boîtier (20).

8. Dispositif optoélectronique selon la revendication 7, **caractérisé en ce qu'**il est prévu sur le bord de boîtier (28) un joint (32) faisant saillie de celui-ci, qui s'étend sur tout la périphérie du bord de boîtier (28) et dans lequel une rainure sur le bord de la pièce rapportée de boîtier (16) s'engage par complémentarité de formes.

9. Dispositif optoélectronique selon la revendication 8, **caractérisé en ce que** le joint (32) est réalisé sous la forme d'une pièce injectée en matière plastique, la matière plastique étant injectée dans une rainure (32a) s'étendant en direction périphérique dans le bord de boîtier (28).

10. Dispositif optoélectronique selon la revendication 9, **caractérisé en ce que** la matière plastique est formée de PTS Thermoflex.

11. Dispositif optoélectronique selon l'une des revendications 1 à 10, **caractérisé en ce qu'**il est prévu comme moyens d'enclenchement sur le boîtier (20), à chaque extrémité des parties supérieure et inférieure (28a, 28b) du bord de boîtier (28), un ergot d'enclenchement (33) en forme de queue d'aronde, faisant saillie du bord de boîtier (28), qui s'engage par complémentarité de formes dans un logement d'enclenchement (34) sur le bord de la pièce rapportée de boîtier (16).

12. Dispositif optoélectronique selon l'une des revendications 2 à 11, **caractérisé en ce que**, quand la fenêtre de sortie (35) est disposée dans la paroi frontale du boîtier (20), les rayons lumineux d'émission (4) sont guidés par l'unité de déflexion à travers la fenêtre de sortie (35) dans une zone de surveillance située dans un plan.

13. Dispositif optoélectronique selon la revendication 12, **caractérisé en ce que** le plan s'étend parallèlement au fond du boîtier (20).

14. Dispositif optoélectronique selon l'une des revendications 2 à 11, **caractérisé en ce que**, quand la fenêtre de sortie (35) est disposée dans le plan du fond du boîtier (20), les rayons lumineux d'émission (4) défléchis par l'unité de déflexion sont déviés par un miroir de déviation (36) et guidés dans la zone de surveillance à travers la fenêtre de sortie (35).

15. Dispositif optoélectronique selon la revendication 14, **caractérisé en ce que** les rayons lumineux d'émission (4) déviés par le miroir de déviation (36) s'étendent à angle droit par rapport au plan du fond du boîtier (20).

16. Dispositif optoélectronique selon la revendication 14 ou 15, **caractérisé en ce que** le miroir de déviation (36) peut être inséré dans un support.

17. Dispositif optoélectronique selon la revendication 16, **caractérisé en ce que** le miroir de déviation (36) peut être introduit dans le support à travers l'ouverture de boîtier (18).
